# EUROPEAN PATENT APPLICATION

(11) **EP 3 674 643 A2**
(43) Date of publication of application: **01.07.2020**
(21) Application number: 19212024.4
(22) Date of filing: 28.11.2019
(51) Int. Cl.: F25D 31/00

(54) **LIQUID COOLER**

(30) Priority: 29.12.2018 CN 201822240983 U
(71) Applicant: Chang, Wen-Cheng, Yuanlin City, Changhua County (TW)
(72) Inventor: Chang, Chun-Sheng, Dongguan City, Guangdong Province (CN)
(74) Representative: Handsome I.P. Ltd

(57) **Abstract**

Liquid cooler comprises a hot liquid container (1), a cold liquid container (2), a cooling sleeve (3), a heat exchanger (4) and a plurality of connecting pipes. The hot liquid container (1) communicates with the cooling sleeve (3) through the connecting pipes. The cooling sleeve (3) has a double-layer structure, the inner pipe of which is used for transporting a hot liquid and the outer pipe thereof is used for transporting cooling water. The cooling water cools the hot liquid in the inner pipe once forming a cold liquid, and the cold liquid passes through the connecting pipes to reach the cold liquid container (2). The heat exchanger (4) cools the cold liquid for a second time forming an ice liquid. After the two-stage cooling, the hot liquid is made into an ice liquid beverage of required temperature avoiding the bitterness and rancidity of high-temperature liquid beverages.

## Description

### FIELD OF THE INVENTION

The invention relates to the field of liquid cooling and, in particular, to a liquid cooler for liquid beverages such as tea and coffee.

### BACKGROUND OF THE INVENTION

In the beverage manufacturing industry, the beverage store staff usually prepares hot liquid essence of particular flavors by mixing various ingredients (coffee, milk, tea, saccharin, salt, etc.) into hot water. According to customer' s need, they decide whether ice is added to the hot liquid essence to make an ice liquid beverage. One drawback of this cooling method is that the taste of the beverage is directly affected by the amount of added ice and the skill of the service personnel. If too much ice is added, the beverage will be diluted to cause it less tasteful; if too little ice is added, the beverage temperature cannot fall down sufficiently and it may taste too strong. Besides, with the development of the take-away business, more and more people prefer not to directly consume in the store to consume and order take-outs. There are uncertainties in the take-away delivery time. In this case, the melting speed of ice cubes also affects the taste of the beverage. All such factors contribute to whether the customers can enjoy their drinks and how they think about the store.

### SUMMARY OF THE INVENTION

In view of the problems existing in the prior art, the invention provides a novel liquid cooler which can directly turn a hot liquid drink into an ice liquid drink without adding ice cubes. The specifics are as follows.

The disclosed liquid cooler comprises a hot liquid container, a cold liquid container, a cooling sleeve, a heat exchanger and a plurality of connecting pipes. The hot liquid is placed in the hot liquid container. The hot liquid container is connected to the cooling sleeve through one of the connecting pipes. The cooling sleeve has a double-pipe structure, with the inner pipe thereof used for transporting the hot liquid and the outer pipe thereof used for transporting cooling water. The cooling water cools the hot liquid inside the inner pipe once to form a cold liquid, and sends it to the cold liquid container through one of the connecting pipes. The cold liquid container communicates with the heat exchanger through one of the connecting pipes. The heat exchanger circulates to cool the cold liquid for the second time to form an ice liquid.

A preferred embodiment of the invention further includes a first water pump and a second water pump. The first water pump drives the cooling water into the outer pipe to cool the hot liquid. The second water pump drives the cold liquid to be transported from the cold liquid container to the heat exchanger.

As a preferred embodiment of the invention, the heat exchanger comprises an air compressor, a heat exchange pipe and a refrigerant pipe. After the cold liquid enters the heat exchange pipe, the refrigerant absorbs heat of the cold liquid to become a gaseous state. The air compressor compresses the gaseous refrigerant to condense back into the liquid state and back to the refrigerant pipe.

As a preferred embodiment of the invention, a temperature probe for detecting the temperature of the liquid is disposed in the cold liquid container.

As a preferred embodiment of the invention, the connecting pipe at the water outlet of the heat exchanger is installed with an electromagnetic valve to control the flow of cold liquid.

As a preferred embodiment of the invention, the cooling sleeve is arranged in a disk shape.

A preferred solution of the invention further comprises a frame, a protection plate, an upper cover and a cleaning faucet. A placement slot for fixing the hot liquid container and the cold liquid container is disposed above the frame. A protection plate is installed on the outer side of the frame. The protection plate protects the internal cooling sleeve, the heat exchanger and the connecting pipes. The upper cover is installed above the frame. The cleaning faucet is installed above the upper cover for outputting filtered clean water.

Benefits of the invention: through the cooperation of the components, the hot liquid is made into an ice liquid beverage of required temperature after being cooled in two stages. There is no need to add ice cubes as in the prior art. And it does not rely on the skills of the personnel. The invention does not over-dilute the beverage or make the beverage too thick and affect the taste. It can make the ice liquid beverages with delicious and original tastes. The low temperature of the liquid beverage can lock its aroma inside, avoiding the bitterness and rancidity in the high-temperature liquid beverage. The invention brings better experience to the customers.

### BRIEF DESCRIPTION OF THE DRAWINGS

FIG. 1 is a structural view of the invention;
FIG. 2 is a three-dimensional view of the invention;
FIG. 3 is an exploded view of the invention; and
FIG. 4 is a schematic view showing the structure of the cooling sleeve according to the invention.

### DESCRIPTION OF THE PREFERRED EMBODIMENTS

The aforementioned and other objectives and advantages of this disclosure will become clearer in light of the following detailed description of an illustrative embodiment of this invention described in connection with the drawings.

In the following description of the invention, it should be noted that the terms "central", "upper", "lower", "left", "right", "vertical", "horizontal", "inside", "outside", and so on refer to the position or direction in the accompanying figures. They are merely used to describe the invention and to simplify the description. They do not indicate or imply that the position or element thus referred to must have a definite orientation, construction and operation. Hence, such descriptions should not be construed as limitation of the invention.

In the description of the invention, it should be emphasized that, unless otherwise noted, the terms "install", "connect", and "communicate" are to be understood broadly. For example, a connection can refer to a fixed connection, a connection that can be disassembled, or an integral connection. It can be a mechanical connection or an electrical connection. It can be a direct connection, an indirect connection through some intermediate medium, or an internal communication between two elements. The specific meanings of the above terms in the specification can be understood by those skilled in the art.

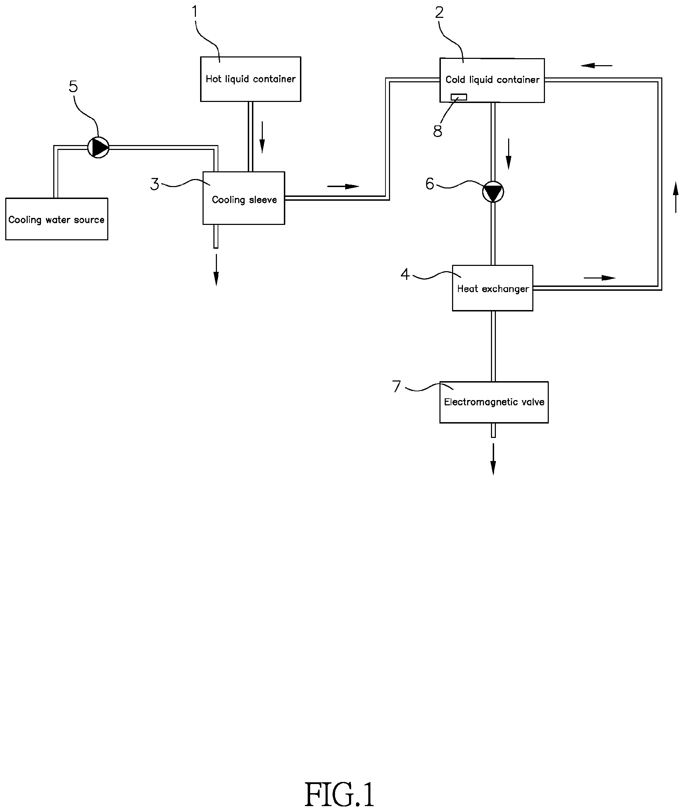

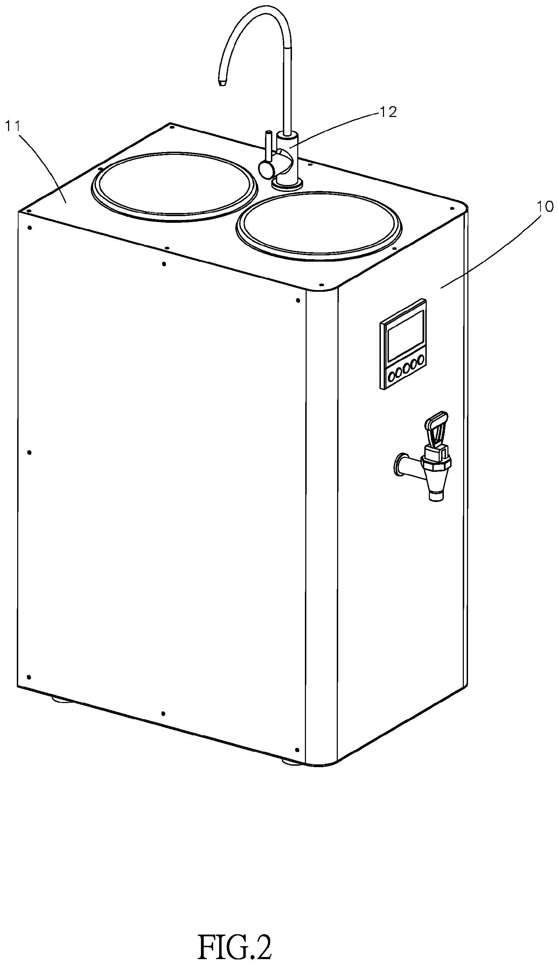

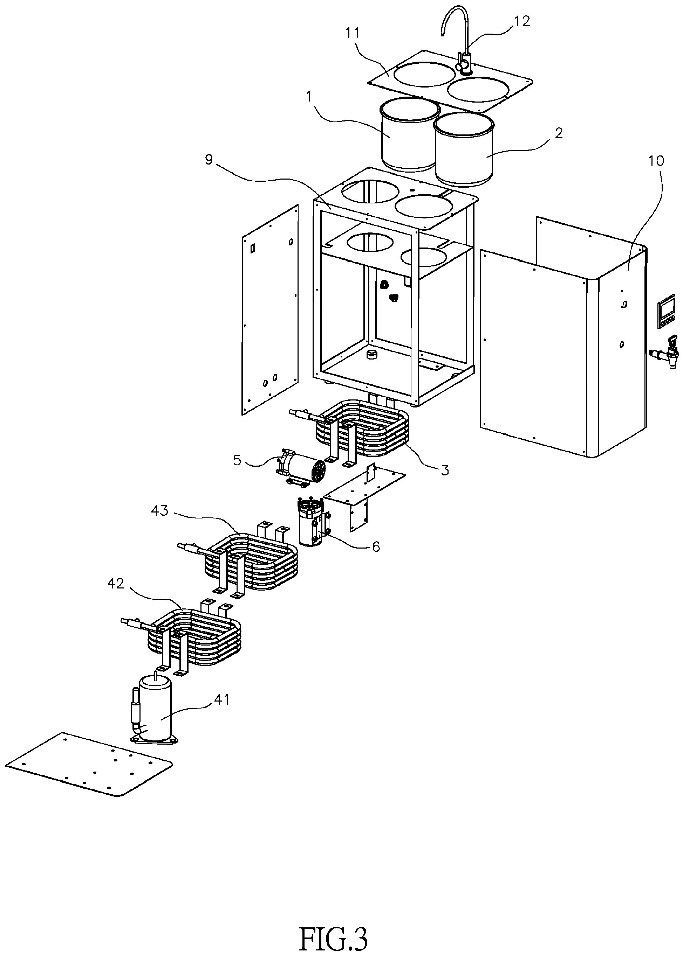

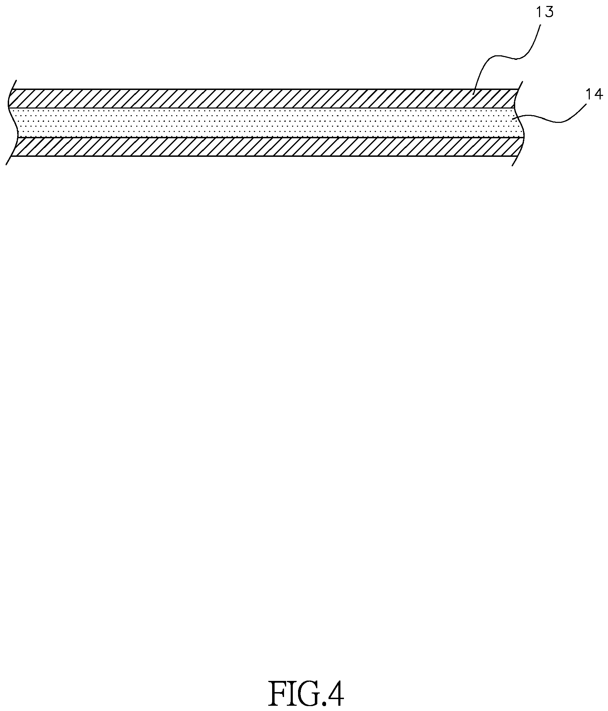

As shown in FIGS. 1 to 4, the disclosed liquid cooler includes a hot liquid container 1, a cold liquid container 2, a cooling sleeve 3, a heat exchanger 4, and a plurality of connecting pipes. A hot liquid of 93 to 95 degrees is disclosed in the hot liquid container 1. The cooling sleeve 3 has a double-layer structure, with the inner pipe thereof used for transporting the hot liquid and the outer pipe thereof used for transporting cooling water. The cooling sleeve 3 is arranged in a disk shape. The hot liquid container 1 communicates with the inner pipe of the cooling sleeve 3 through one of the connecting pipes. The outer pipe of the cooling sleeve 3 communicates with a cooling water source through another one of the connecting pipes. The cooling water source is preferably the tap water because the tap water is convenient and cheap to obtain at large quantities. The cooling water cools the hot liquid in the inner pipe once to form a cold liquid of 25 to 30 degrees. The cold liquid passes through one of the connecting pipes to enter the cold liquid container 2, which communicates with the heat exchanger 4 through another one of the connecting pipes. The heat exchanger 4 circulates to cool the cold liquid for the second time, forming an ice liquid of 4 degrees or less.

Specifically, the disclosed tea cooler further includes a first water pump 5 that drives the cooling water into the outer pipe to cool the hot liquid and a second water pump 6 that drives the cold liquid from the cold liquid container 2 to the heat exchanger 4. An electromagnetic valve 7 is installed in the connection pipe at the water outlet of the heat exchanger 4. A temperature probe 8 for detecting the temperature of the liquid is installed in the cold liquid container 2. When the temperature probe 8 determines that the temperature of the cold liquid has not reached a predetermined value, the electromagnetic value closes the water outlet of the heat exchanger. The tea circulates among the cold liquid container 2 and the heat exchanger 4 several times, until the temperature probe 8 detects that the temperature of the cold liquid reaches the predetermined value. In this case, the electromagnetic valve 7 opens for the ice liquid of a special temperature to flow out. The first water pump 5, the second water pump 6, the electromagnetic valve 7, the heat exchanger 4, and the temperature probe 8 can be controlled by a pre-programmed PLC controller.

Specifically, the heat exchanger 4 is a common refrigeration heat exchange device for performing a second cooling process on the cold liquid. The heat exchanger 4 includes an air compressor 41, a heat exchange pipe 42 and a refrigerant pipe 43. The heat exchange pipe 42 also has a double-layer structure. After the cold liquid enters the heat exchange pipe, the refrigerant absorbs the heat of the cold liquid to become a gaseous state. The air compressor 41 then compresses the gaseous refrigerant to condense into a liquid and to return to the refrigerant pipe 43. Preferably, a heat expansion valve can be disposed in the pipeline. After the heat expansion valve is throttled, the refrigerant can quickly return to a low temperature.

Specifically, the disclosed tea cooler further comprises a frame 9, a protection plate 10, an upper cover 11 and a cleaning faucet 12. A placement slot for fixing the hot liquid container 1 and the cold liquid container 2 is arranged above the frame 9. The protection plate 10 is installed on the outer side of the frame 9 to protect the internal cooling sleeve 3, the heat exchanger 4, and the connecting pipes. The upper cover 11 is installed above the frame 9. The cleaning faucet 12 is installed above the upper cover 11 to output filtered clean water, which can be used to clean watermarks, dirt, stains, debris and other stains in the liquid cooler.

While the invention is described in some detail hereinbelow with reference to certain illustrated embodiments, it is to be understood that there is no intent to limit it to those embodiments. On the contrary, the aim is to cover all modifications, alternatives and equivalents falling within the spirit and scope of the invention as defined by the appended claims.

## Claims

1. A liquid cooler comprising: a hot liquid container (1), a cold liquid container (2), a cooling sleeve (3), a heat exchanger (4) and a plurality of connecting pipes; wherein a hot liquid is disposed in the hot liquid container (1) which is connected with the cooling sleeve (3) through one of the connecting pipes; the cooling sleeve (3) has a double-layer structure, with the inner pipe thereof used for transporting the hot liquid and the outer pipe thereof used for transporting cooling water; the cooling water cools the hot liquid in the inner pipe once to form a cold liquid to be sent to the cold liquid container (2) via another one of the connecting pipes; the cold liquid container (2) connects to the heat exchanger (4) via yet another one of the connecting pipes; and the heat exchanger (4) circulates to cool the cold liquid for the second time to form an ice liquid.

2. The liquid cooler of claim 1 further comprising a first water pump (5) and a second water pump (6), wherein the first water pump (5) drives the cooling water into the outer pipe to cool the hot liquid, and the second water pump (6) drives the cold liquid from the cold liquid container (2) to the heat exchanger (4).

3. The liquid cooler of claim 1, wherein the heat exchanger (4) includes an air compressor (41), a heat exchange pipe (42) and a refrigerant pipe (43); after the cold liquid enters the heat exchange pipe (42), the refrigerant absorbs heat of the cold liquid to become a gaseous state; and the air compressor (41) compresses the gaseous refrigerant to condense back into the liquid state and back to the refrigerant pipe (43).

4. The liquid cooler of claim 1, wherein a temperature probe (8) for detecting the temperature of liquid is installed inside the cold liquid container (2).

5. The liquid cooler of claim 1, wherein an electromagnetic valve (7) is installed in the connecting pipe at the water outlet of the heat exchanger (4) for controlling the flow of the cold liquid.

6. The liquid cooler of claim 1, wherein the cooling sleeve (3) is arranged in a disk shape.

7. The liquid cooler of claim 1 further comprising a frame (9), a protection plate (10), an upper cover (11), and a cleaning faucet (12); wherein a placement slot for fixing the hot liquid container (1) and the cold liquid container (2) is disposed above the frame (9); the protection plate (10) is installed on the outer side of the frame (9) to protect the internal cooling sleeve (3), the heat exchanger (4), and the connecting pipes; the upper cover (11) is installed above the frame (9); and the cleaning faucet (12) is installed above the upper cover (11) to output filtered clean water.
